**Europäisches Patentamt**

**European Patent Office**

**Office européen des brevets**

(19)

(11) Veröffentlichungsnummer: **0 193 771**
A2

## (12) EUROPÄISCHE PATENTANMELDUNG

(21) Anmeldenummer: **86101969.3**

(22) Anmeldetag: **17.02.86**

(51) Int. Cl.⁴: **B 65 G 61/00**, B 65 G 47/90

(30) Priorität: **06.03.85 DE 3507920**

(43) Veröffentlichungstag der Anmeldung: **10.09.86**
Patentblatt 86/37

(84) Benannte Vertragsstaaten: **AT BE CH DE FR GB IT LI LU NL SE**

(71) Anmelder: **Hermann Spicher GmbH, Waltherstrasse 78, D-5000 Köln 80 (DE)**

(72) Erfinder: **Spicher, Hermann, Forststrasse 7, D-5060 Bergisch Gladbach 1 (DE)**

(74) Vertreter: **Patentanwälte Dipl.-Ing. W. Dahlke Dipl.-Ing. H.-J. Lippert, Frankenforster Strasse 137, D-5060 Bergisch Gladbach 1 (DE)**

(54) Vorrichtung zur automatischen Entnahme von Gegenständen aus Behältern.

(57) Eine Vorrichtung zur automatischen einzelnen Entnahme von Gegenständen aus Behältern besteht aus einem Gestell (1), unter dem mindestens ein Behälter (4) mit den zu entnehmenden Gegenständen aufstellbar ist, einem an dem Gestell im Bereich über dem Behälter beweglich angeordneten Entnahmearm (2), einer Halterung (10) für den Entnahmearm, die über eine kardanische Aufhängung mit dem Gestell verbunden ist, einem Antrieb zur Längsverschiebung des Entnahmearms (2) relativ zu der Halterung (10) sowie weiteren Antrieben zur Verschwenkung der Halterung (10) in verschiedenen im Winkel zueinander stehenden Ebenen. Um zu erreichen, daß mit dem Entnahmearm (2) eine extrem große Abgabehöhe erzielbar ist und die Vorrichtung beispielsweise auch zum Beladen von relativ hohen Schwerkraftordnern anwendbar ist, sind zur Verschwenkung der Halterung (10) des Entnahmearms (2) Zahnsegmente (14, 17) vorgesehen, die mit antreibbaren Ritzeln (16, 22) im Eingriff stehen.

Dipl.-Ing. W. Dahlke
Dipl.-Ing. H.-J. Lippert
Patentanwälte
Frankfurter Straße 137
Bergisch Gladbach

14. Februar 1986 L/Ma

Hermann Spicher GmbH
5000 Köln 80

**"Vorrichtung zur automatischen Entnahme
von Gegenständen aus Behältern"**

Die Erfindung betrifft eine Vorrichtung zur automatischen einzelnen oder gruppenweisen Entnahme von Gegenständen aus Behältern, bestehend aus einem Gestell, in dessen unterem Bereich mindestens ein Behälter mit den zu entnehmenden Gegenständen aufstellbar ist, einem an dem Gestell im Bereich über dem Behälter beweglich angeordneten Entnahmearm, einer Einrichtung zum axialen Vor- und Zurückfahren des Entnahmearms, einer Halterung für den Entnahmearm, die über eine kardanische Aufhängung mit dem Gestell verbunden ist, einem Antrieb zur Längsverschiebung des Entnahmearms relativ zu der Halterung sowie weiteren Antrieben zur Verschwenkung der Halterung in verschiedenen im Winkel zueinander stehenden Ebenen.

Der Erfindung liegt die Aufgabe zugrunde, die Vorrichtung der genannten Art derart weiter auszubilden, daß mit dem Entnahmearm eine extrem große Abgabehöhe erzielbar ist, so daß die Vorrichtung beispielsweise auch zum Beladen von relativ hohen Schwerkraftordnern anwendbar ist.

0193771

§ 2

Erfindungsgemäß wird diese Aufgabe dadurch gelöst, daß zur Verschwenkung der Halterung des Entnahmearms Zahnsegmente vorgesehen sind, die mit antreibbaren Ritzeln im Eingriff stehen.

Durch die Verwendung eines Segmentantriebs sind beliebig große Ausschwenkwinkel für den Entnahmearm möglich, so daß jede geforderte Abgabehöhe erreicht werden kann. Darüber hinaus ist auch bei Vorrichtungen mit extrem großen Schwenkwinkeln des Entnahmearms eine kompakte Bauweise möglich.

Zweckmäßig sind zwei Antriebe zur Verschwenkung der Halterung des Entnahmearms um zwei senkrecht zueinander stehende Achsen vorgesehen.

Der erste Antrieb kann dabei an einem Tragrahmen sitzen, in welchem ein Schwenkrahmen um eine horizontale Achse schwenkbar gelagert ist, wobei das mit dem Ritzel des ersten Antriebs im Eingriff stehende Zahnsegment starr an dem Schwenkrahmen befestigt ist.

Der zweite Antrieb kann an dem Schwenkrahmen angeordnet sein und die Halterung des Entnahmearms ist zweckmäßig schwenkbar in dem Schwenkrahmen gelagert, wobei das mit dem Ritzel des zweiten Antriebs im Eingriff stehende Zahnsegment starr an der Halterung des Entnahmearms befestigt ist.

Die die kardanische Aufhängung der Halterung des Entnahmearms bildenden Achsen sind vorzugsweise in einem Abstand vom oberen Ende des Entnahmearms nach unten versetzt angeordnet. Diese Maßnahme fördert nicht nur die Kompaktheit der Vorrichtung, sondern es sind auch günstigere Eintauchwinkel des Entnahmearms in die Behälter möglich, aus denen die Gegenstände entnommen werden sollen. Zweckmäßig ist die kardanische Aufhängung etwa um 1/3 der Länge der Halterung des Entnahmearms nach unten versetzt angeordnet.

Aufgrund des kompakten Aufbaus der kardanischen Aufhängung der Halterung des Entnahmearms sowie der dazugehörigen Antriebe kann der Entnahmearm einschließlich seiner Aufhängungs- und Antriebseinrichtungen in dem Gestell verfahrbar sein. Dabei ist vorzugsweise der Tragrahmen als Laufwagen ausgebildet, der auf Schienen verfahrbar ist. Durch diese Maßnahme ist die Vorrichtung vielseitiger einsetzbar und die Totzeiten können extrem kurz gehalten werden.

Zweckmäßig sind an dem Laufwagen Axial-Wälzlager vorgesehen, während die Schienen eine zylindrische Außenfläche aufweisen, die von den Axial-Wälzlagern umschlossen sind. Dadurch ist ein leichtes und problemloses Verschieben des Entnahmearms innerhalb des Gestells möglich.

Die Erfindung ist in der Zeichnung beispielsweise veranschaulicht und im nachstehenden im einzelnen anhand der Zeichnung beschrieben. Es zeigen:

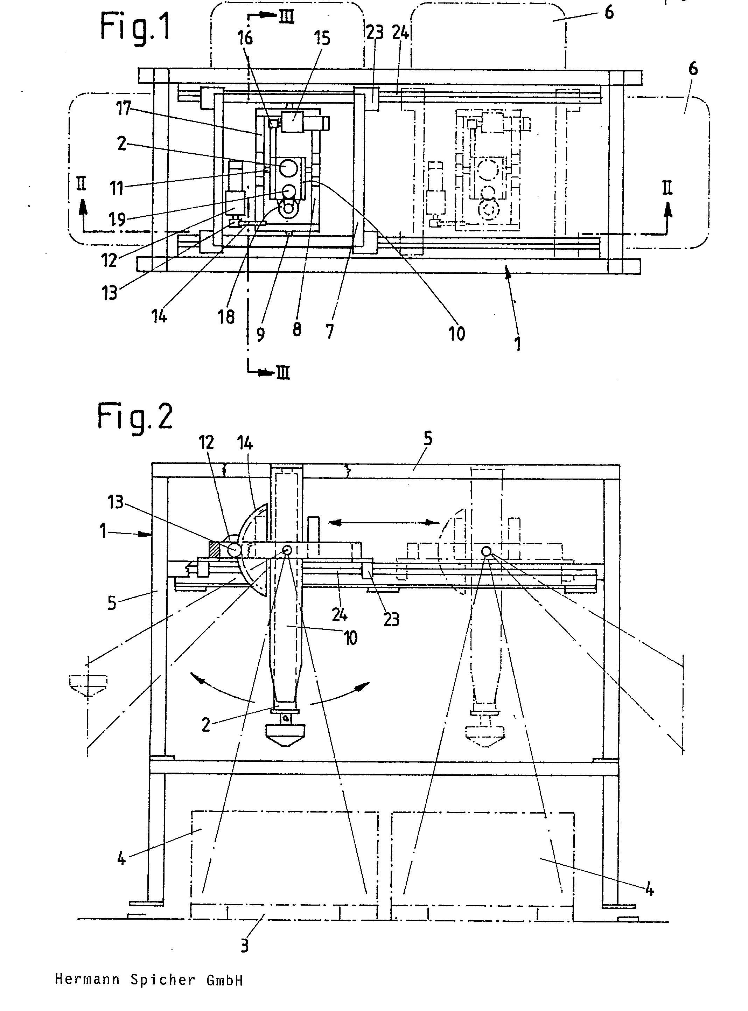

Fig. 1    eine Draufsicht auf eine Vorrichtung zur automatischen einzelnen Entnahme von Gegenständen aus Behältern,

Fig. 2    einen Schnitt entlang der Linie II - II aus Fig. 1 und

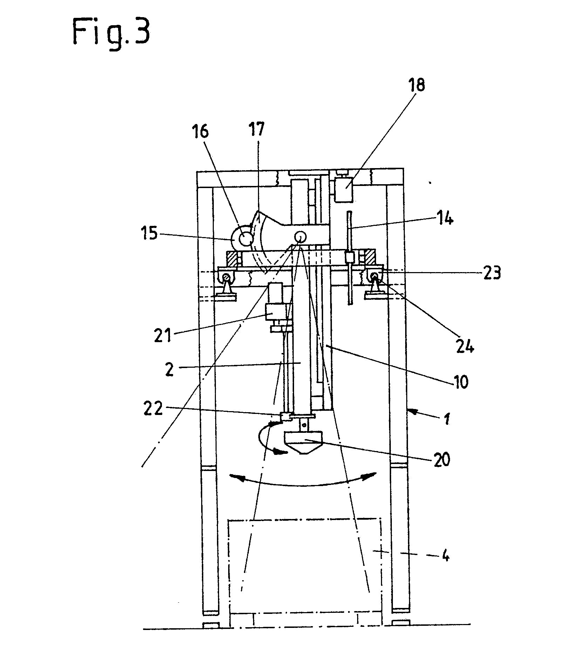

Fig. 3    einen Schnitt entlang der Linie III - III aus Fig. 1.

Nach der Zeichnung besteht die automatische Entnahmevorrichtung im wesentlichen aus einem Gestell 1, einem an dem Gestell kardanisch aufgehängten Entnahmearm 2 sowie im unteren Teil des Gestells unterhalb des Entnahmearms 2 einem Aufnahmebereich 3 für mehrere nebeneinander aufstellbare zu entleerende Behälter 4.

Das Gestell 1 besteht aus stabilen Stahlträgern 5 und ist außen herum mit einer in der Zeichnung nicht näher dargestellten Schutzverkleidung versehen, die sich zum Einsetzen und Herausnehmen der Behälter 4 öffnen läßt.

Neben dem Gestell 1 können an mindestens drei Seiten Auffangbehälter 6 für die einzelnen aus dem Behälter 4 entnommenen Gegenstände vorgesehen sein. Die Auffangbehälter 6 gehören beispielsweise zu in der Zeichnung nicht dargestellten Schwerkraftordnern, die eine relativ große Bauhöhe aufweisen.

Zur kardanischen Aufhängung des Entnahmearms 2 dient ein Tragrahmen 7, ein Schwenkrahmen 8, der um eine horizontale Achse 9 schwenkbar an dem Tragrahmen 7 gelagert ist, sowie eine Halterung 10, die den Entnahmearm 2 trägt und um eine Achse 12 schwenkbar ist, die in dem Schwenkrahmen 8 gelagert ist und senkrecht zu der horizontalen Schwenkachse 9 des Schwenkrahmens 8 verläuft.

Zur Verschwenkung des Schwenkrahmens 8 relativ zu dem Tragrahmen 7 dient ein elektrischer Getriebemotor 12, der an dem Tragrahmen 7 befestigt ist und mit einem Antriebsritzel 13 versehen ist. Das Antriebsritzel 13 weist eine parallel zu der Schwenkachse 9 des Schwenkrahmens 8 verlaufende Drehachse auf und steht mit einem Zahnsegment 14 im Eingriff, das starr an dem Schwenkrahmen 8 in einer vertikalen Ebene angeordnet ist. Durch Betätigung des Getriebemotors 12 wird der Schwenkrahmen 8 um die horizontale Achse 9 hin- und hergeschwenkt.

Zur Verschwenkung der Halterung 10 des Entnahmearms 2 ist ein zweiter elektrischer Getriebemotor 15 vorgesehen, der ein Antriebsritzel 16 aufweist. Die Rotationsachse des Antriebsritzels 16 liegt genau parallel zu der Schwenkachse 11 der Halterung 10 des Entnahmearms 2. Das Ritzel 16 steht mit einem Zahnsegment 17 im Eingriff, das starr an der Halterung 10 des Entnahmearms 2 befestigt ist, und zwar in einer Ebene senkrecht zu der Schwenkachse 11 der Halterung 10. Durch Betätigung des zweiten Getriebemotors 15 wird die Halterung 10 des Entnahmearms 2 in dem Schwenkrahmen 8 um die Schwenkachse 11 hin- und hergeschwenkt.

Durch Kombination der beiden Schwenkbewegungen kann der Entnahmearm 2 über einer relativ großen Fläche bewegt werden.

Zur Ausführung einer vertikalen Bewegung ist der Entnahmearm 2 längsverschieblich in der Halterung 10 geführt. Die Längsverschiebung erfolgt über einen elektrischen Antriebsmotor 18 sowie einen in der Zeichnung nur andeutungsweise dargestellten Gewindespindelantrieb 19.

Der untere Greifteil 20 des Entnahmearms 2 ist zusätzlich drehbar in dem Entnahmearm 2 angeordnet und wird mit Hilfe eines über einen Elektromotor 21 antreibbaren Ritzels 22 um seine Längsachse verdreht.

Die gesamte kardanische Aufhängung des Entnahmearms 2 ist etwa um 1/3 der Länge der Halterung 10 von dessen oberem Ende nach unten versetzt angeordnet. Der Tragrahmen 7 ist somit in einem Abstand unterhalb des oberen Endes des Gestells 1 angeordnet.

Die kardanische Aufhängung sowie die verschiedenen Antriebe sind sehr kompakt ausgebildet und finden im Inneren des Tragrahmens 7 Platz, der schmaler als das Gestell 1 ausgebildet ist. Insofern bereitet es keine Schwierigkeiten, den Tragrahmen 7 als Laufwagen auszubilden. Dieser weist an seiner Unterseite Axial-Wälzlager 23 in Form von Kugelführungen auf, die Schienen 24 mit zylindrischer Außenfläche umschließen.

In dem in der Zeichnung dargestellten Ausführungsbeispiel ist das Gestell 1 so lang ausgebildet, daß es die Breite von zwei Werkstückbehältern überspannt. Der als Laufwagen ausgebildete Tragrahmen 7 ist auf den Schienen 24 etwa um eine Behälterbreite verfahrbar, so daß nach Entleerung des ersten Behälters sofort der bereitgestellte zweite Behälter entleert werden kann.

Selbstverständlich ist es auch möglich, das Gestell 1 länger auszubilden und den Entnahmearm 2 über größere Strecken zu bewegen. Zum Antrieb des Tragrahmens können beliebige, an sich bekannte Antriebseinrichtungen dienen. Da der Entnahmearm mit seiner Aufhängung und seinen Antrieben kompakt und sehr leicht ausgebildet ist, ist die Verschiebung des Tragrahmens 7 problemlos.

0193771

Dipl.-Ing. W. Dahlke
Dipl.-Ing. H.-J. Lippert
Patentanwälte
Frankenforster Straße 137
5060 Bergisch Gladbach 1

14. Februar 1986 L/Ma

**Hermann Spicher GmbH
5000 Köln 80**

**A n s p r ü c h e**

1. Vorrichtung zur automatischen einzelnen oder gruppenweisen Entnahme von Gegenständen aus Behältern, bestehend aus einem Gestell, in dessen unterem Bereich mindestens ein Behälter mit den zu entnehmenden Gegenständen aufstellbar ist, einem an dem Gestell im Bereich über dem Behälter beweglich angeordneten Entnahmearm, einer Einrichtung zum axialen Vor- und Zurückfahren des Entnahmearms, einer Halterung für den Entnahmearm, die über eine kardanische Aufhängung mit dem Gestell verbunden ist, einem Antrieb zur Längsverschiebung des Entnahmearms relativ zu der Halterung sowie weiteren Antrieben zur Verschwenkung der Halterung in verschiedenen im Winkel zueinander stehenden Ebenen, d a d u r c h  g e k e n n z e i c h n e t, daß zur Verschwenkung der Halterung (10) des Entnahmearms (2) Zahnsegmente (14, 17) vorgesehen sind, die mit antreibbaren Ritzeln (16, 22) im Eingriff stehen.

2. Vorrichtung nach Anspruch 1, d a d u r c h  g e k e n n z e i c h n e t, daß zwei Antriebe (12, 15) zur Verschwenkung der Halterung (10) des Entnahmearms (2) um zwei senkrecht zueinander stehende Achsen (9, 11) vorgesehen sind.

3. Vorrichtung nach Anspruch 2, d a d u r c h g e k e n n z e i c h n e t, daß der erste Antrieb (12) an einem Tragrahmen (7) sitzt, in welchem ein Schwenkrahmen (8) um eine horizontale Achse (9) schwenkbar gelagert ist und daß das mit dem Ritzel (13) des ersten Antriebs (12) im Eingriff stehende Zahnsegment (14) starr an dem Schwenkrahmen (8) befestigt ist.

4. Vorrichtung nach Anspruch 2 oder 3, d a d u r c h g e k e n n z e i c h n e t, daß der zweite Antrieb (15) an dem Schwenkrahmen (8) angeordnet ist, daß an dem Schwenkrahmen (8) die Halterung (10) des Entnahmearms (2) schwenkbar gelagert ist und daß das mit dem Ritzel (16) des zweiten Antriebs (15) im Eingriff stehende Zahnsegment (17) starr an der Halterung (10) des Entnahmearms (2) befestigt ist.

5. Vorrichtung nach einem der Ansprüche 1 bis 4, d a d u r c h g e k e n n z e i c h n e t, daß die die kardanische Aufhängung der Halterung (10) des Entnahmearms (2) bildenden Achsen (9, 11) in einem Abstand vom oberen Ende des Entnahmearms (2) nach unten versetzt angeordnet sind.

6. Vorrichtung nach Anspruch 5, d a d u r c h g e k e n n z e i c h n e t, daß die kardanische Aufhängung etwa um 1/3 der Länge der Halterung (10) des Entnahmearms (2) nach unten versetzt angeordnet ist.

7. Vorrichtung nach einem der Ansprüche 1 bis 6, d a d u r c h g e k e n n z e i c h n e t, daß

der Tragrahmen (7) als Laufwagen ausgebildet ist, der auf Schienen (24) verfahrbar ist.

8. Vorrichtung nach Anspruch 5, d a d u r c h g e k e n n z e i c h n e t, daß an dem Laufwagen Axial-Wälzlager (23) vorgesehen sind, während die Schienen (24) eine zylindrische Außenfläche aufweisen, die von den Axial-Wälzlagern (23) umschlossen sind.

Fig.1

Fig.2

Hermann Spicher GmbH

0193771

Fig.3